# EUROPEAN PATENT SPECIFICATION

(11) **EP 1 114 871 B1**
(45) Date of publication and mention of the grant of the patent: **10.09.2003**
(21) Application number: 00300082.5
(22) Date of filing: 07.01.2000
(51) Int. Cl.: C21D 8/02, B21B 1/38

(54) **Process for the production of material of metals and alloys having fine microstructure or fine nonmetallic inclusions and having less segregation of alloying elements.**
Verfahren zur Herstellung von Werkstoffen aus Metallen und Legierungen mit einem feinen Gefüge oder mit feinen nicht-metallischen Einschlüssen und mit geringerer Segregation der Legierungselemente
Procédé pour la production de matériaux de métaux et d'alliages ayant une microstructure fine ou des inclusions non-métalliques fines et ayant moins de ségrégation des éléments d'alliage

(43) Date of publication of application: 11.07.2001
(73) Proprietor: NIPPON METAL INDUSTRY CO.,LTD., Shinjuku-ku Tokyo (JP)
(72) Inventor: Ishida, Masashi, c/o Nippon Metal Industry Co., Sagamihara-shi, Kanagawa-Ken (JP); Tomita, Akihiro, c/o Nippon Metal Industry Co., Sagamihara-shi, Kanagawa-Ken (JP); Imai, Daiske, c/o Nippon Metal Industry Co., Sagamihara-shi, Kanagawa-Ken (JP); Takeda, Seiichi, c/o Nippon Metal Industry Co., Sagamihara-shi, Kanagawa-Ken (JP)
(74) Representative: Woods, Geoffrey Corlett

(56) References cited:
- EP-A- 0 488 222
- US-A- 4 736 884
- PATENT ABSTRACTS OF JAPAN vol. 007, no. 191 (C-182), 20 August 1983 (1983-08-20) -& JP 58 093812 A (KIRIN HAMONO KK), 3 June 1983 (1983-06-03)
- DATABASE WPI Section Ch, Week 197629 Derwent Publications Ltd., London, GB; Class M13, AN 1976-54803X XP002135782 & JP 50 019672 A (MITSUBISHI METAL CORP), 3 March 1975 (1975-03-03)
- ED. BY H.E. MCGANNON: "The Making, Shaping and Treating of Steel" 1971 , UNITED STATES STEEL , USA XP002135781 * Pages 675, 932, 986-987 *
- DATABASE WPI Section Ch, Week 197913 Derwent Publications Ltd., London, GB; Class M13, AN 1979-24955B XP002135783 -& JP 54 024260 A (JAPAN STEEL WORKS LTD), 23 February 1979 (1979-02-23)
- DATABASE WPI Section Ch, Week 199019 Derwent Publications Ltd., London, GB; Class M21, AN 1990-146524 XP002135784 & SU 1 496 848 A (KOMM MINE-METAL INS), 30 July 1989 (1989-07-30)

## Description

### Field of the Invention

The present invention relates to a process for the production of a material of metals and alloys, such as a metal plate, from a slab, the material having a microstructure or fine nonmetallic inclusions and having less segregation of alloying elements.

### Prior Art of the Invention

Generally, a material of metals and alloys such as a metal plate, or the like is industrially produced by the steps of melting → casting-hot working (rolling, etc.) → cold working (rolling, etc.). In the above industrial production, it is very difficult to make a material homogenized by the melting and casting steps alone. Since, a segregation is liable to take place at solidification during casting, and further, precipitates nonmetallic inclusions, etc., tend to be non-homogeneously dispersed. For overcoming the non-homogeneousness of alloying elements caused by casting, homogenizing heat treatment (soaking) is sometimes carried out at a high temperature for a long period of time. However, diffusion of alloying elements is insufficient to be homogenized in many cases, and not much diffusion of alloying elements takes place even in the hot working step to be carried out thereafter. That is, the homogenizing is sufficient in few cases. Further, in the crystal orientation, each of large grains formed during the casting is liable to form a texture, so the distribution of crystal orientation of end product differs from one site to another.

As will be described below, however, there is recently strongly demanded a material of metals and alloys having a fine microstructure or fine nonmetallic inclusions and having less segregation of alloying elements. That is, there are some fields of use where homogeneous materials of metals and alloys are demanded, as will be described below. (1) When many apertures having same size are made by etching as in the shadow mask for color Braun tube, desirably, alloying elements of the material are homogeneous, and crystal orientation of the material does not differ from one place to another. When the alloying elements are not homogenously distributed, an etching rate in one site differs from an etching rate in another, and the apertures vary in size, so that a Braun tube is downgraded in performance. Further, the crystal orientation influences the etching rate, and a local non-uniformity of the crystal orientation results in a local non-uniformity of aperture sizes, so that a color Braun tube is downgraded in performance. (2) By cold working, ferritic stainless steel such as SUS 430 come to have a surface roughness called roping or fidging, and the product quality thereof is downgraded. The reason therefor is considered to be that crystal orientations are not at random, and the crystal orientations are grouped. The roping, etc., can be decreased by increasing the degree of randomness of the crystal orientations. (3) In high-carbon blade steel, carbide tends to segregate in a central portion of an ingot, and it is desired to disperse the carbide finely in the entirety of the ingot. (4) Nonmetallic inclusions such as metal oxide, metal nitride and metal sulfide, etc., constitute sites where a cracking initiates or defects which are visually observed. With an increase in the size of the inclusions, they are more liable to constitute defects. While inclusions having the same volumes are present, if they are present uniformly as a larger number of fine inclusions, they do not constitute much defects. It is also said to be preferred that a larger number of the inclusions are present in view of the smoothness of cut edges during press-stamping and the lifetime of a die.

Patents Abstracts of Japan for JP 58-093812 discloses a method of producing a composite metal including layers of oxide scale.

JP 50-019672 discloses a method of producing a Ti-Pd alloy clad to Ti or Ti-based alloys.

EP-A2-0,488,222 discloses a method of producing a clad steel plate.

As explained above, there are many fields where the homogeneousness of materials of metals and alloys is desired. However, no proper production process therefor has been available so far. The present inventors have made diligent studies for the above homogeneousness and have found a remarkable process, which has led to the present invention.

### Summary of the Invention

It is an object of the present invention to provide a process for the production of a homogenized material of metals and alloys from a slab.

It is another object of the present invention to provide a process for the production of a material of metals and alloys from a slab, the material having a fine microstructure or fine nonmetallic inclusions and having less segregation of alloying elements.

According to the present invention, there is provided a process for the production of a metal or alloy material, which process comprises:
(a) processing a slab having a form suitable for hot rolling into a sheet or a coiled strip by either hot rolling or by both hot rolling and cold rolling, the thickness of the sheet or strip being 1/4 or less of the thickness of the slab; and
(b) cutting the sheet or strip to prepare sheets having a predetermined length, cleaning the surfaces of the sheets by pickling, making a stack consisting of said sheets and integrating the sheets by circumferential welding; and
(c) processing the thus obtained welding-integrated sheets into a sheet or a coiled strip by either hot rolling or by both hot rolling and cold rolling.

Further, according to the present invention, preferably, the steps (b) and (c) in the above process are carried out twice to four times.

### Detailed Description of the Invention

In the present invention, a slab is rolled to decrease its thickness by a hot rolling step or by a hot rolling step and a cold rolling step. When a slab can be thickness-decreased to have a proper thickness by a hot rolling step alone, the thus hot-rolled sheet or coiled strip is cut to have a predetermined length. When a slab cannot be thickness-decreased to have a proper thickness by a hot rolling step alone, cold rolling is further carried out to prepare a sheet or coiled strip having a proper thickness. The term "proper thickness" is a thickness which is 1/4 or smaller, preferably 1/10 or smaller based on the thickness which the slab has before it is hot-rolled. When the sheet or coil obtained by the rolling has a proper thickness, the number of repetition of the steps (b) and (c). to be described later can be decreased. Preferably, the sheet or coil obtained by the rolling has a width nearly equivalent to the width of the slab, in view of an easiness in operation to be carried out thereafter.

The sheet(s) or the coil(s) produced by either hot rolling or both of hot rolling and cold rolling is cut to have a predetermined length. The length of the sheets obtained by the cutting is determined by taking account of an easiness in operation. The sheets obtained by the cutting are surface-cleaned by picking, and then a proper number of the sheets are stacked.

The method for the above surface cleaning includes cleaning with an alkali, polishing and washing with a solvent. When foreign substances are. present on surfaces of the sheets, it is difficult to produce a material as an end product. When an oil or fat is present on the surfaces, it is preferred to employ cleaning with an alkali or cleaning with a solvent. As a solvent, a volatile solvent is preferred since no solvent resides on the surfaces.

A stack of the sheets is circumferentially welded. The method of the circumferential welding includes a method in which a welding bead is mounded on sides of a stack of a plurality of the sheets and a method in which a box is prepared from the material as same kind as the material of the sheets and the sheets are placed therein. After the circumferential welding, preferably, air inside the welding-integrated sheets is removed by suction, which is preferred in view of removal of substances which constitute foreign substances between the sheets. The above suction after the welding can be carried out by sandwiching a pipe between sheets of the welded portion, carrying out the suction and then closing the pipe.

The material of metals and alloys comes to have a finer microstructure as processing such as sheet rolling is proceeded with. In the present invention, a plurality of sheets having a decreased thickness are stacked, and the thus-prepared stack is rolled to produce a sheet or a coil having a finer microstructure.

With an increase in the number of the above stacking and rolling steps, the grains as a microstructure become finer, precipitates and nonmetallic inclusions come to be more finely and homogeneously dispersed, and the degree of randomness of crystal orientations increases in the material obtained. Further, a segregation distance of alloying elements in the sheet thickness direction becomes smaller, so that the alloying elements come to be homogeneously distributed by mere soaking for a short period of time or mere heating during hot rolling.

"How many sheets are stacked" will be discussed here. When two or three sheets are stacked, not high effect is produced on the homogenizing and the formation of a finer microstructure. When the procedures of stacking are repeated, the formation of a finer microstructure proceeds. For each stacking, however, the steps of rolling, cutting, improvement of flatness, surface cleaning and welding are required, and with an increase in the repetition of the stacking procedures, the production cost increases. Industrially, therefore, it is preferred to complete the process by carrying out the stacking procedures once or twice. For this reason, it is required to stack at least four sheets. So that, in the procedures of hot rolling or both of the hot rolling and the cold rolling, preferably, the sheet obtained by the procedures has a width which the slab has before the procedures, and the sheet obtained by the procedures has a thickness 1/4 or smaller based on the thickness which the slab has before the procedures. With an increase in the number of the sheets stacked, the homogenizing and the formation of a finer microstructure proceed further, and there is therefore no special upper limitation to be imposed on the number of the sheets to be stacked. Since, however, the above number increases to excess, much labor is required. The number of the sheets to be stacked therefore has its own limit from the viewpoint of labor and requirements of the homogenizing and the formation of a finer microstructure.

### Embodiments of preferred applications

Preferred applications of the process of the present invention will be described below.

### Application 1: Application to material for shadow mask

A shadow mask for use in a Braun tube for a computer color display has fine electron-beam-passing apertures made by etching. In recent years, an Fe-Ni alloy having a low thermal expansion coefficient is used in many cases in place of aluminum killed steel. As compared with aluminum killed steel, the Fe-Ni alloy is liable to have a non-uniformity by etching on its surface, and the surface of a mask prepared by the etching is liable has a streak-shaped pattern or some other non-uniformity. It is therefore desired to develop an Fe-Ni alloy that can be uniformly etched. Of the above non-uniformities, for example, a streak-shaped pattern extending in the rolling direction which pattern is called "streak pattern" is said to be caused by a local difference in etching rate and a local non-uniformity in aperture sizes which are caused by a local non-uniformity in crystal orientation (Japanese Patent No. 2,672,491). The above phenomenon is caused by the local non-uniformity in crystal orientation. The above non-uniformity in crystal orientation is caused by a casting structure having a specific orientation which structure exists in an ingot (JP-A-9-209089). Conventionally, attempts are made to overcome the above defect by re-heating in the steps of hot-rolling with short reduction or by increasing the number of repetition of annealing and cold rolling. However, a color TV screen and a computer color display are being pushed toward higher resolutions, and the pitch of apertures made in the shadow mask is getting smaller and smaller. There is therefore demanded a material which is more homogenized and has a finer structure. The present invention works well for the above application.

### Application 2: Blade material containing finely dispersed carbide

When a blade steel containing at least 1 % by weight of carbon is produced by continuous casting, carbide segregates in the central portion of a slab in the thickness direction. When the thus-obtained slab is rolled to produce a blade, empirically, the carbide remains in a blade edge passing the center of the material thickness so that the blade edge is brittle. Sheets obtained from a slab are stacked and hot rolled by applying the present invention for avoiding the above phenomenon. In this case, there can be produced a ductile blade steel containing fine carbide dispersed in the entirety of the blade.

### Application 3: Making non-metallic inclusions finer by dispersing them

Nonmetallic inclusions have influences on various properties of a material. For example, general stainless steel has a large content of nonmetallic inclusions having a size of approximately 50 µm. When it is surface-polished to form a mirror surface, the mirror surface is not excellent and is full of fine flaws. As far as nonmetallic inclusions of type A which can be deformed during hot rolling process are mainly contained in a material, those inclusions can be finely dispersed by applying the present invention, and almost no flaws are observable on a mirror surface obtained by polishing.

Nonmetallic inclusions have an influence on stampability of a thin metal sheet and the lifetime of a die used for the stamping. It is said that as the nonmetallic inclusions are more and more finely and homogeneously dispersed, a material shows a more smooth edges when the material is stamped and the lifetime of a die more increases. Since a material of metals and alloys produced by the process of the present invention contains finely and homogeneously dispersed nonmetallic inclusions, the present invention can also work well for the above application.

### Examples

The present invention will be explained further with reference to Examples hereinafter, while the present invention shall not be limited by these Examples.

### Example 1

A 150 mm thick cast slab of an Fe-Ni alloy containing 36 % by weight of Ni was hot rolled to obtain 10 mm thick hot rolled sheets. The sheets were annealed at 950°C and pickled with an acid. Ten sheets of them were stacked and circumferentially welded, and the integrated sheets were again hot rolled to obtain a 4 mm thick sheet. Then, the sheet was annealed, pickled and cold rolled. Further, the sheet was annealed, cold rolled, annealed and cold rolled to obtain a 0.13 mm thick cold rolled sheet. The sheet was cut to prepare a test piece. A prior art sample was also prepared as shown in the following Table 1. A ferric chloride aqueous solution was sprayed to the test piece and the prior art sample to make apertures, to determine whether or not streak patterns in a shadow mask were present. Table 1 shows the results.

**Table 1:**

| Relationship between production process and presence/absence of streak patterns | | |
|---|---|---|
| | Production process | Streak patterns |
| Example 1 | Cast slab (150 mm) → hot rolling (10 mm) → annealing, pickling → stack of 10 sheets → hot rolling (4 mm) → annealing, pickling → cold rolling → annealing → cold rolling →annealing → cold rolling (0.13 mm) | No (not present) |
| Prior art sample | Cast slab(150 mm) → hot rolling (4 mm) → annealing, pickling → cold rolling → annealing → cold rolling → annealing → cold rolling (0.13 mm) | Yes (present) |

As shown in Table 1, the present invention can provide a streak-pattern-free material for Fe-Ni shadow masks.

### Example 2

For polishing a SUS304 stainless steel sheet to form a mirror surface, a 150 mm thick SUS 304 slab was heated to 1,200°C, hot rolled, annealed and pickled to obtain a 6 mm thick hot rolled coiled strip. The coild strip was cut to obtain sheets having a length of approximately 6 m each, 20 sheets of them were stacked, the resultant stack was circumferentially welded to integrate them, and air inside was removed by suction. The integrated sheets were further heated to 1,200°C, hot rolled and cold rolled to obtain a 1.2 mm thick stainless steel sheet. For comparing the so-obtained stainless steel sheet was compared with a stainless steel sheet with a stainless steel sheet conventionally prepared, each sheet which the size is 1 m width and 2 m length were polished to form mirror surface. Slight blur and flaws caused by nonmetallic inclusions remained on the surface of the conventionally prepared stainless steel sheet, while the sheet according to the present invention had a blur and flaw-free clear mirror surface.

As explained above, the present invention produces excellent effects. That is, according to the present invention, there can be provided a more homogenized and more finely made metal material for a shadow mask, a blade material having fine carbide dispersed in the entirety of the material and a material of metals and alloys having solid nonmetallic inclusions more finely dispersed.

## Claims

1. A process for the production of a metal or alloy material, which process comprises:
(a) processing a slab having a form suitable for hot rolling into a sheet or a coiled strip by either hot rolling or by both hot rolling and cold rolling, the thickness of the sheet or strip being 1/4 or less of the thickness of the slab; and
(b) cutting the sheet or strip to prepare sheets having a predetermined length, cleaning the surfaces of the sheets by pickling, making a stack consisting of said sheets and integrating the sheets by circumferential welding; and
(c) processing the thus obtained welding-integrated sheets into a sheet or a coiled strip by either hot rolling or by both hot rolling and cold rolling.

2. A process according to claim 1, wherein the thickness of the sheet or strip obtained in step (a) is 1/10 or less of the thickness of the slab.

3. A process according to claim 1 or 2, wherein the sheet or strip obtained in step (a) has a width approximately equivalent to the width of the slab.

4. A process according to any one of claims 1 to 3, wherein the cleaning of the surfaces of the sheets in step (b) further comprises washing with an alkali, polishing or washing with a solvent.

5. A process according to claim 4, wherein the washing with a solvent is carried out with a volatile solvent.

6. A process according to any one of the preceding claims, wherein air between the sheets integrated by welding in step (c) is removed by suction.

7. A process according to claim 6, wherein the removal of air by suction is carried out by providing at least one pipe in a circumferentially welded portion of the sheets, removing the air by suction and closing the pipe.

8. A process according to any one of the preceding claims, wherein steps (b) and (c) are repeated a plurality of times after step (c).

9. A process according to claim 8, wherein steps (b) and (c) are repeated from 2 to 4 times.

10. A process for preparing a shadow mask, a ferritic stainless steel, a blade material containing carbide or a die, which process comprises:
(a) preparing a metal or alloy material by a process according to any one of claims 1 to 9; and
(b) using the thus obtained metal or alloy material to prepare a shadow mask, a ferritic stainless steel, a blade material containing a carbide or a die.

## Patentansprüche

1. Verfahren für die Herstellung eines Metalls oder einer Legierung, das Verfahren umfassend:
(a) Verarbeiten einer Bramme, welche eine geeignete Form zum Warmwalzen in ein Blech oder in ein gewickeltes Spaltband entweder durch Warmwalzen oder durch sowohl Warmwalzen als auch Kaltwalzen aufweist, wobei die Dicke des Blechs oder des Spaltbands 1/4 oder weniger der Dicke der Bramme beträgt; und
(b) Schneiden des Blechs oder des Spaltbands zur Anfertigung von Blechen, welche eine vorbestimmte Länge aufweisen, Reinigen der Oberflächen der Bleche, Aufstapeln der Bleche und Zusammenfassen der Bleche durch Rundschweißen; und
(c) Verarbeiten der auf diese Weise erlangten verschweißten Bleche zu einem Blech oder einem gewickelten Spaltband entweder durch Warmwalzen oder durch sowohl Warmwalzen als auch Kaltwalzen.

2. Verfahren nach Anspruch 1, wobei die in Schritt (a) erlangte Dicke des Blechs oder des Spaltbands 1/10 oder weniger der Dicke der Bramme beträgt.

3. Verfahren nach Anspruch 1 oder 2, wobei das in Schritt (a) erlangte Blech oder Spaltband eine Breite aufweist, welche ungefähr gleich der Breite der Bramme ist.

4. Verfahren nach einem der Ansprüche 1 bis 3, wobei die Reinigung der Oberflächen der Bleche in Schritt (b) ferner Waschen mit einem Alkali, Polieren oder Waschen mit einem Lösungsmittel umfasst.

5. Verfahren nach Anspruch 4, wobei das Waschen mit einem Lösungsmittel mit einem flüchtigen Lösungsmittel ausgeführt wird.

6. Verfahren nach einem der vorhergehenden Ansprüche, wobei die Luft zwischen den in Schritt (c) verschweißten Blechen durch Absaugung entfernt wird.

7. Verfahren nach Anspruch 6, wobei die Entfernung der Luft durch Absaugung durch die Bereitstellung wenigstens eines Rohres in einem rundgeschweißten Abschnitt der Bleche ausgeführt wird, wobei die Luft durch Absaugen und Verschließen des Rohres entfernt wird.

8. Verfahren nach einem der vorhergehenden Ansprüche, wobei die Schritte (b) und (c) nach dem Schritt (c) mehrere Male wiederholt werden.

9. Verfahren nach Anspruch 8, wobei die Schritte (b) und (c) 2 bis 4 Mal wiederholt werden.

10. Verfahren zur Anfertigung einer Lochmaske, eines ferritischen Edelstahls, eines Klingenmaterials, welches Karbid enthält, oder eines Stempels, das Verfahren umfassend:
(a) Anfertigen eines Metalls oder einer Legierung durch ein Verfahren nach einem der Ansprüche 1 bis 9; und
(b) Verwenden des auf diese Weise erlangten Metalls oder Legierung zur Anfertigung einer Lochmaske, eines ferritischen Edelstahls, eines Klingenmaterials, welches ein Karbid enthält, oder eines Stempels.

## Revendications

1. Procédé pour la production d'un matériau en métal ou en alliage, lequel procédé comprend les étapes consistant à :
(a) transformer une brame d'une forme se prêtant à un laminage à chaud pour obtenir une tôle ou un feuillard en bobine soit par laminage à chaud soit par laminage à la fois à chaud et à froid, l'épaisseur de la tôle ou du feuillard étant de ¼ ou moins de l'épaisseur de la brame ; et
(b) découper la tôle ou le feuillard pour réaliser des tôles d'une longueur prédéterminée, nettoyer les surfaces des tôles par décapage, former une pile constituée par lesdites tôles et réunir les tôles les unes aux autres par soudage périphérique ; et
(c) transformer les tôles ainsi réunies par soudage pour obtenir une tôle ou un feuillard en bobine soit par laminage à chaud soit par laminage à la fois à chaud et à froid.

2. Procédé selon la revendication 1, dans lequel l'épaisseur de la tôle ou du feuillard obtenu lors de l'étape (a) est de 1/10 ou moins de l'épaisseur de la brame.

3. Procédé selon la revendication 1 ou 2, dans lequel la tôle ou le feuillard obtenu lors de l'étape (a) a une largeur approximativement équivalente à la largeur de la brame.

4. Procédé selon l'une quelconque des revendications 1 à 3, dans lequel le nettoyage des tôles lors de l'étape (b) comporte en outre un lavage à la soude, un polissage ou un lavage par solvant.

5. Procédé selon la revendication 4, dans lequel le lavage par solvant s'effectue avec un solvant volatil.

6. Procédé selon l'une quelconque des revendications précédentes, dans lequel l'air présent entre les tôles réunies les unes aux autres par soudage lors de l'étape (c) est évacué par aspiration.

7. Procédé selon la revendication 6, dans lequel l'évacuation d'air par aspiration se fait en disposant au moins un tuyau dans une partie à soudage circonférentiel des tôles, en évacuant l'air par aspiration et en fermant le tuyau.

8. Procédé selon l'une quelconque des revendications précédentes, dans lequel les étapes (b) et (c) sont répétées plusieurs fois après l'étape (c).

9. Procédé selon la revendication 8, dans lequel les étapes (b) et (c) sont répétées de 2 à 4 fois.

10. Procédé pour réaliser un masque perforé, un acier inoxydable ferritique, un matériau de lame contenant un carbure ou une matrice, lequel procédé comprend les étapes consistant à :
(a) élaborer un matériau en métal ou en alliage par un procédé selon l'une quelconque des revendications 1 à 9 ; et
(b) utiliser le matériau en métal ou en alliage ainsi obtenu pour réaliser un masque perforé, un acier inoxydable ferritique, un matériau de lame contenant un carbure ou une matrice.
